# EUROPEAN PATENT APPLICATION

(11) **EP 2 732 738 A1**
(43) Date of publication of application: **21.05.2014**
(21) Application number: 12192772.7
(22) Date of filing: 15.11.2012
(51) Int. Cl.: A47J 31/18, A47J 31/40, A47J 31/56

(54) **Automated turkish coffee machine with housing for encapsulated coffee and comprising removable coffee preparation means**

(71) Applicant: Eksen Makine Sanayi ve Ticaret A.S., 41480 Kocaeli (TR)
(72) Inventor: Tahincioglu, Besim, 41480 Kocaeli (TR)
(74) Representative: Sevinç, Erkan

(57) **Abstract**

The present invention proposes a domestic appliance and specifically an electrical household appliance for preparing Turkish coffee by way of using encapsulated Turkish coffee packets. The apparatus comprises a main housing having an inner receptacle part and a removable coffee pot receiving coffee to be prepared. Said removable coffee pot is in electrical communication with a housing extension part comprising control electronics and electrical heating means. Temperature change data in said removable coffee pot is monitored to determine boiling point and transferred heat energy is then reduced in a timely manner whereby overflowing of the content is prevented.

## Description

### Technical Field of the Invention

The present invention relates to an electrical household appliance and more specifically to a Turkish coffee preparation machine.

### Background of the Invention

It is submitted that automated Turkish coffee preparation brings about a plurality of technical problems. The main problem is to prevent overflow of the coffee ingredients in the end of the heating process. This is typically achieved by regulating heat energy transferred to the coffee pot, i.e. by reducing power consumption of the heating elements.

To this end, accurate timing of power reduction is of primary importance. A plurality of coffee machines available in the market makes use of this principle, i.e. reducing heat energy transferred to the coffee pot a certain time period prior to boiling.

Further, as different people may prefer Turkish coffee in different densities; proper homogenization of the ingredients is also a necessity and contributes to the overall taste.

The present invention provides the advantageous concept according to which a removable coffee pot is used as a coffee preparation medium. In this manner, dry coffee ingredients provided in encapsulated form are mixed with water and coffee homogenized with water is poured into said removable coffee pot. The homogenized coffee is then processed further in said removable coffee pot to be ready for consumption. The concept of the invention both provides ease of operation by making use of capsules and provides an homogenized coffee liquid to be heated by said removable coffee pot in the manner that a process control algorithm prevents overflowing of the same.

The apparatus comprising an inner water container separate from the medium in which coffee is prepared ensures that the apparatus itself transfers the required amount of water to be added to the removable coffee pot. This constitutes a major ease of use feature since the user only intervenes in selecting the number of cups to be served.

### Objects of the Invention

Primary object of the present invention is to provide a fully automated electrical Turkish coffee preparation apparatus preventing overflow of the coffee.

Another object of the present invention is to provide a fully automated electrical Turkish coffee preparation apparatus having means for homogenizing coffee such that overall taste is improved.

Another object of the present invention is to provide a fully automated electrical Turkish coffee preparation apparatus enabling use of said coffee pot separately for serving purposes.

Another object of the present invention is to provide a fully automated electrical Turkish coffee preparation apparatus operable without user intervention by which the user do not need to measure and adjust the amount of water as required for the number of cups to be prepared.

### Summary of the Invention

The present invention proposes a domestic appliance and specifically an electrical household appliance for preparing Turkish coffee by way of using encapsulated Turkish coffee packets. The apparatus comprises a main housing having an inner receptacle part and a removable coffee pot receiving coffee to be prepared. Said removable coffee pot is in electrical communication with a housing extension part comprising control electronics and electrical heating means. Temperature change data in said removable coffee pot is monitored to determine boiling point and transferred heat energy is then reduced in a timely manner whereby overflowing of the content is prevented.

### Brief Description of the Figures

Accompanying drawings are given solely for the purpose of exemplifying a Turkish coffee preparation machine whose advantages over prior art were outlined above and will be explained hereinafter in brief. The drawings are not meant to delimit the scope of protection as identified in the claims nor should they be referred to alone in an effort to interpret the scope identified in said claims without recourse to the technical disclosure in the description of the present invention.

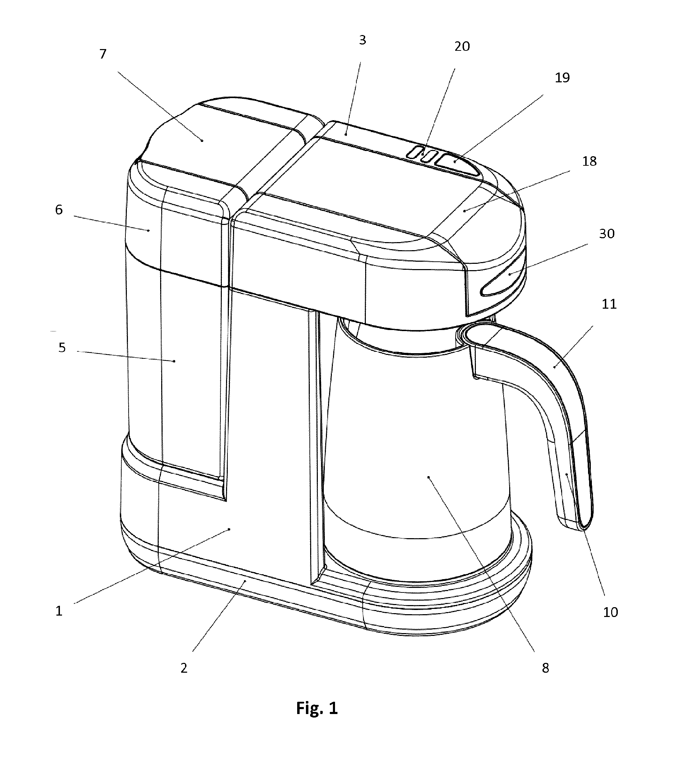

Fig. 1 demonstrates a perspective view of the Turkish coffee apparatus with an encapsulated Turkish coffee packet housing according to the present invention.

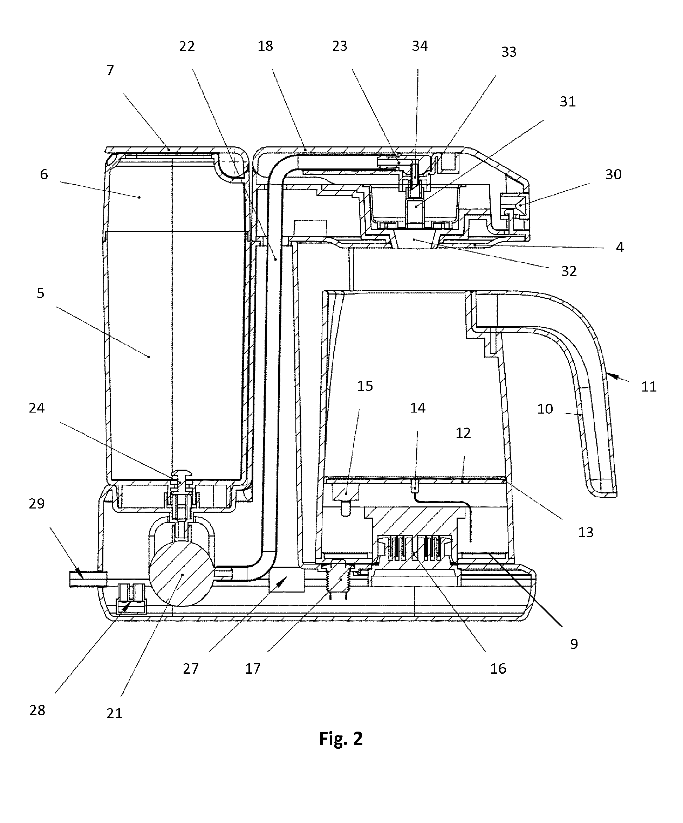

Fig. 2 demonstrates a lateral cross-sectional view of the Turkish coffee apparatus according to the present invention.

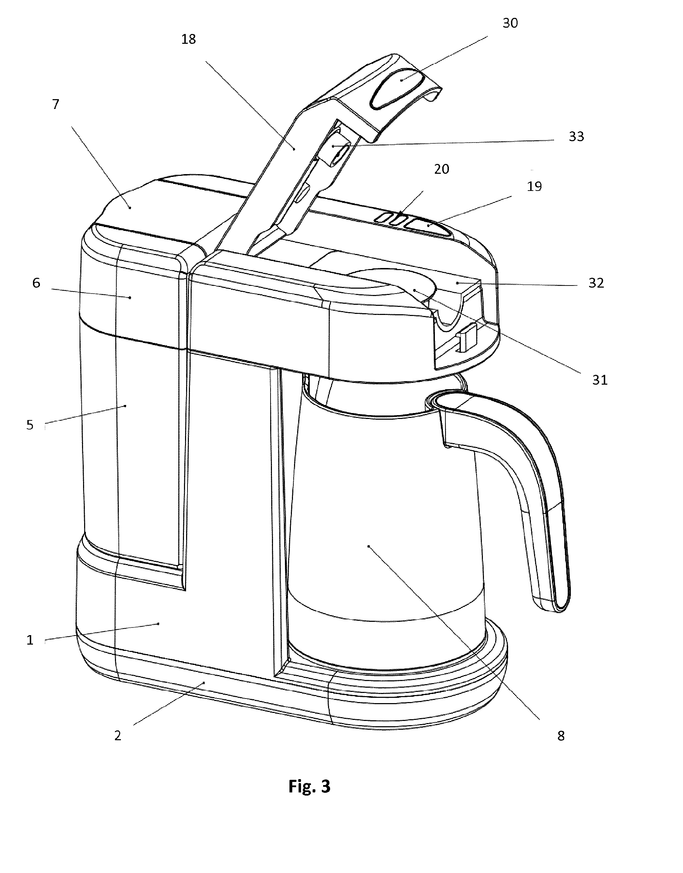

Fig. 3 demonstrates a perspective view of the Turkish coffee apparatus with an opened encapsulated Turkish coffee packet housing according to the present invention.

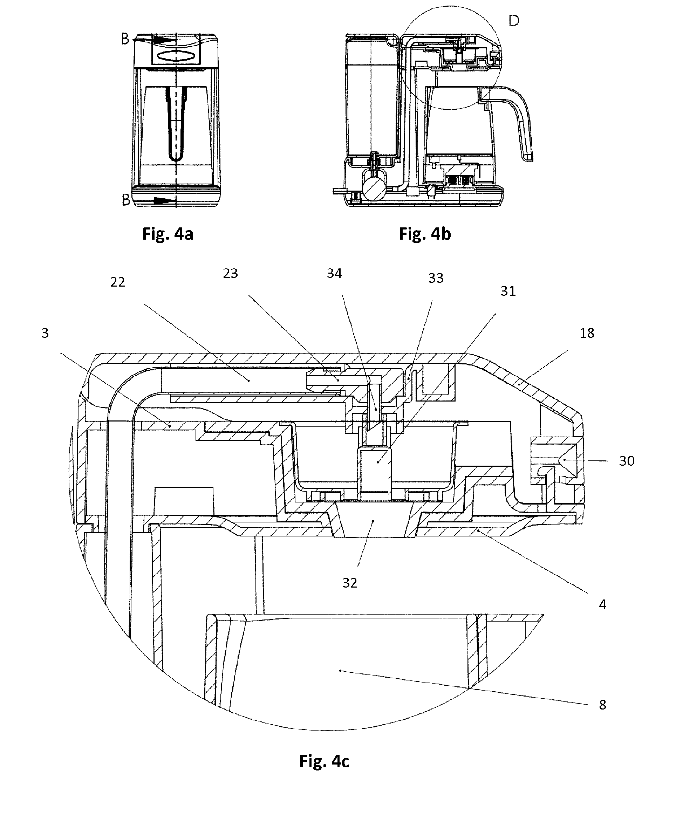

Fig. 4b demonstrates a cross-sectional view of the Turkish coffee apparatus along cross-sections B-B as shown in Fig. 4a. Fig. 4c demonstrates an enlarged view of the D section in Fig. 4b.

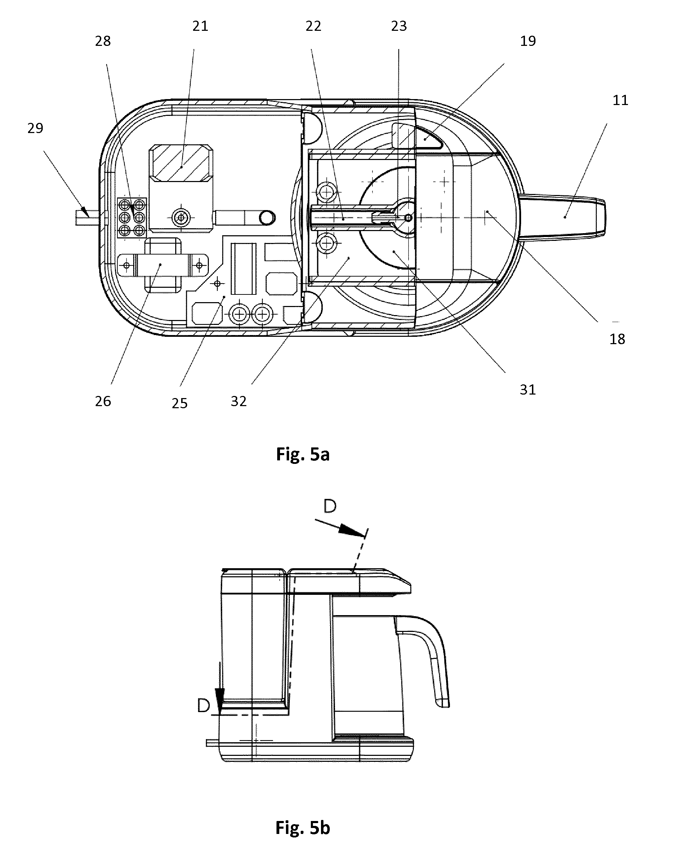

Fig. 5a demonstrates a cross-sectional view of the Turkish coffee apparatus along partial cross-sections as shown in Fig. 5b.

### Detailed Description of the Invention

The following numerals are assigned to different parts demonstrated in the drawings:
- 1: Main housing
- 2: Main housing base
- 3: Main housing top surface
- 4: Main housing extended portion
- 5: Water receptacle
- 6: Water receptacle top portion
- 7: Water receptacle cover
- 8: Coffee pot
- 9: Coffee pot base
- 10: Coffee pot handle
- 11: Coffee pot outer surface
- 12: Thick film
- 13: Thick film sealing means
- 14: NTC Sensor
- 15: Thermic switch
- 16: Connector
- 17: Position switch
- 18: Capsule housing cover
- 19: Operating button
- 20: Visual indicators
- 21: Pump
- 22: Conduit
- 23: Nozzle
- 24: Water receptacle slot
- 25: Electronic control unit
- 26: Transformator
- 27: On/off switch
- 28: Cable connector
- 29: Mains cord
- 30: Cover unlocking button
- 31: Capsule
- 32: Capsule housing
- 33: Perforator adaptor
- 34: Capsule perforating water outlet

Referring now to the figures outlined above, the present invention proposes an electrical household appliance for preparing Turkish coffee by way of using encapsulated Turkish coffee packets. A main housing (1) having a base (2) and a top surface (3) is provided with an electrical connection cord (29) as seen in the enclosed figures.

The apparatus comprises a main housing (1) with a water receptacle (5) therein receiving water to be served into a removable coffee pot (8) placeable on a coffee pot base (9) integral to said main housing (1). Said base (9) comprises an electrical connector (16) for effecting power transfer to a thick film (12) base. The apparatus further comprises an extended portion (4) of the main housing, said portion extending over said coffee pot's (8) upper portion. Said water receptacle (5) also has an openable cover (7) over a top portion (6) thereof. Said coffee pot (8) typically has a handle (10).

Said Turkish coffee preparation apparatus according to the present invention comprises a heating element (12) in the form of a thick film (12), which has the known advantage of instant heating and cooling, i.e. operating without accumulating heat energy to be radiated after switching off. This might be inconvenient since accumulated heat energy could initiate overflowing of the coffee ingredients even after deenergization of said heating element (12). Thick film heaters are commercially available in the market under different trade names.

The present invention further features a Turkish coffee capsule housing (32) for accommodating encapsulated Turkish coffee packets, i.e. capsules (31). This arrangement provides that a capsule (31) accommodated as such is perforated by a perforator (34) longitudinally extending within a water outlet designated as the perforator adaptor (33) according to the invention, said perforator (34) designed as integral to a capsule housing cover (18). Perforation process provides that water transferred from said water receptacle (5) directly reaches said capsule as said perforator (34) is provided coaxially within said water outlet. Said capsule housing cover (18) is not freely openable but opening thereof is effected by way of pushing a front button, designated as the cover unkicking button (30).

To this end, the apparatus of the invention functions as follows: Water is added to said water receptacle (5) and a Turkish coffee capsule (31) is placed in the respective housing (32). Said removable coffee pot (8) is also optionally filled with sugar in the desired amount. Upon switching on of the apparatus by the respective on/off button (27), said thick film (12) is energized and a certain amount of water as preset by the user is transferred to said coffee pot (8) with the help of a pump (21) and a conduit (22) in this effect. Transfer of water form said water receptacle (5) to said coffee pot (8) can also be effected without a pump (21) but with siphoning action through a bidirectional valve, i.e. by the pressure from the expanded steam. In this case, a heating arrangement is implemented to heat water in said receptacle (5).

Power transfer to said thick film (12) is interrupted at a certain temperature around a preset boiling temperature. Temperature in the coffee pot is monitored by means of a sensor in the form of a NTC thermistor (14) in electrical communication with an electronic control unit (25). The NTC sensor (14) used herein is a negative temperature coefficient thermistor element, wherein resistance of the sensor decreases as the temperature increases. Temperature values detected by means of the NTC sensor (14) are sent to the electronic control unit (25) and said electronic unit (25) enables keeping temperature of the coffee ingredients within the coffee pot (8) at values lower than said preset boiling temperature. A thermal switch (15) functions to disconnect the coffee pot (8) from the mains power upon detection of excess heat generated by the heating element (12) when coffee liquid within the coffee pot (8) runs out for any reason; thus, preventing damage to the surrounding area and to the device by effecting termination of the heating process.

It is worthy of note that temperature monitoring in the apparatus of the invention may be undertaken by other suitable sensors as practiced in the art and the NTC sensor (14) as such is not the only option but one within a plurality of equally effective alternatives. This same also applies to the bimetal thermal switch (15).

The apparatus may conventionally comprise a user informative screen with visual indicators (20) and a control panel.

In a nutshell, the present invention proposes a Turkish coffee preparation apparatus comprising a main housing (1) having a water receptacle (5) for containing water. Therefore, water at a certain amount for a certain number of cups to be served as determined by the user is transferred to said coffee pot (8) with the help of said pump (21) and said conduit (22). In the meantime, dry coffee ingredients provided in encapsulated form are mixed with water in said capsule housing (32) and cold coffee liquid is poured into said removable coffee pot (8). Coffee liquid poured into said coffee pot (8) continually in small amounts is hence being homogenized in this process and then heated in said removable coffee pot to be ready for consumption.

Said removable coffee pot (8) placeable on said coffee pot base (9) that is integral to said main housing (1) receives coffee ingredients mixed with water as poured thereon from a nozzle (23). Said main housing (1) with said extended portion (4) incorporating said nozzle (23) spray cold coffee liquid over said coffee pot (8), said portion (4) extending over said coffee pot's (8) open upper portion.

Said removable coffee pot (8) being in electrical communication with the main housing (1) and comprising electrical heating means (12) therefore effects heating of the coffee liquid. Said removable coffee pot (8) is electrically connected to said main housing (1) only when it is properly placed on said coffee pot base (9) to be electrically coupled with said connector (16) of said base (9). A position switch (17) communicates proper positioning of said coffee pot (8) to said electronic control unit (25). To this end, coffee liquid is heated by said electrical heating means (12) and heating process is monitored by said electronic control unit (25), which is in electrical communication with said NTC sensor (14).

## Claims

1. A Turkish coffee preparation apparatus comprising a main housing (1) having a water receptacle (5) for containing water, a removable coffee pot (8) placeable on a coffee pot base (9) integral to said main housing (1), said main housing (1) further having an extended portion (4) with a nozzle (23), said extended portion (4) extending over said coffee pot's (8) upper portion **characterized in that**;
said removable coffee pot (8) comprises electrical heating means (12) in electrical communication with said main housing (1),
said extended portion (4) comprises a capsule housing (32) for receiving a Turkish coffee packet (31) in the form of encapsulated dry coffee ingredients,
said capsule housing (32) into which a water outlet opens is in fluid communication with said water receptacle (5) and,
a perforator (34) is provided to be longitudinally extending in a coaxial relationship with said water outlet for effecting perforation of said coffee packet (32).

2. A Turkish coffee preparation apparatus as set forth in Claim 1 wherein said coffee pot (8) comprises a temperature sensor (14) for sensing temperature in said pot.

3. A Turkish coffee preparation apparatus as set forth in Claim 1 or 2 wherein said electrical heating means (12) is a thick film heater.

4. A Turkish coffee preparation apparatus as set forth in Claim 2 or 3 wherein said temperature sensor (14) is an NTC thermistor.

5. A Turkish coffee preparation apparatus as set forth in Claim 1 or 4 wherein said main housing (1) comprises a liquid transfer means (21) in the form of a pump for effecting transfer of water from said water receptacle (5) to said nozzle (23).

6. A Turkish coffee preparation apparatus as set forth in Claim 5 wherein said electrical heating means (12), NTC thermistor (14) and said liquid transfer means (21) are in electrical communication with an electronic control unit (25).
